# EUROPÄISCHE PATENTANMELDUNG

(11) **EP 2 048 358 A1**
(43) Veröffentlichungstag der Anmeldung: **15.04.2009**
(21) Anmeldenummer: 06812667.1
(22) Anmeldetag: 25.09.2006
(51) Int. Cl.: F03D 3/06

(54) **WINDENERGIEANLAGE BUKTUKOV-3**

(30) Priorität: 14.07.2006 KZ 060829
(71) Anmelder: Buktukov, Nikolay, Almaty 050043 (KZ)
(72) Erfinder: BUKTUKOV, Beisen, Almaty, 050090 (KZ); MOLDABAEVA, Gulnaz, Almaty, 050043 (KZ); ZHAKYP, Aitmukhamed, Almaty, 050043 (KZ)
(74) Vertreter: Jeck, Anton
(86) Internationale Anmeldenummer: PCT/KZ2006/000009
(87) Internationale Veröffentlichungsnummer: WO 2008/007934

(57) **Zusammenfassung**

Die Erfindung betrifft ein Windkraftwerk (WKW), das aus einem Belastungsgewicht, Trägern und Flügeln mit Innen- und Außenkanten besteht. An einer senkrechten, unbeweglichen Achse sind mehrere Flügel mittels eines aus Seilen, Zugstangen und Stangen bestehenden Verstellmechanismus verschwenkbar angebracht. Mit der Windgeschwindigkeit verändert sich die Stellung der Flügel und damit die Angriffsfläche für den Wind. Dies führt zu einer automatischen Anpassung der Leistung des Windkraftwerks, da bei geringer Windgeschwindigkeit die wirksame Flügelfläche größer und bei großer Windgeschwindigkeit kleiner wird.

## Beschreibung

Die Erfindung betrifft ein Windkraftwerk bestehend aus einem Belastungsgewicht, Trägern und Flügeln mit Innen- und Außenkanten.

Das Windkraftwerk kann zur autonomen Energieversorgung von Objekten sowie zur Stromerzeugung für Energiesysteme eingesetzt werden.

Es ist ein Wind-Rotor-Kraftwerk "Boni-SchHV" (Patent PK Nr. 5595) bekannt, welches aus Wind-Rotor-Modulen besteht. Die Wind-Rotor-Module umfassen Leitapparate und senkrechte Flügel-Wind-Rotoren, die ringförmig ausgeführt sind. Die Anzahl der Flügel und die Durchmesser variieren je nach der Höhe in Übereinstimmung mit der Hellmann-Formel.

Die Generatorbaugruppe enthält eine oder mehrere Stufen, die mit der Wind-RotorWelle verbunden sind.

Dieses Wind-Rotor-Kraftwerk weist folgende Mängel auf:
- Einen hohen Metallaufwand.
- Die Notwendigkeit, hohe Fertigungsklasse zu erreichen, um die Funktion des Wind-Rotor-Kraftwerkes bei großen Windgeschwindigkeiten sicherzustellen.
   Dies verursacht seinerseits eine wesentliche Verteuerung.
- Betriebsunfähigkeit bei niedrigen Windgeschwindigkeiten.

Es ist ein Windmotor nach dem Savonius-System bekannt (Patent PK Nr. 3230), welcher zwei Halbzylinder-Flügel aufweist. Die Halbzylinder-Flügel sind zwischen Platten angeordnet und weisen Außen- und Innenkanten auf. Sie sind kinematisch fest mit der Welle und gelenkig mit den Flügeln verbunden. Die Flügel sind an ihren Außenkanten mit Belastungsgewichten versehen.

Dieser Windmotor hat einen wesentlichen Mangel. Er besteht darin, dass der Durchmesser zwecks Leistungserhöhung um mehr als 0,5 m vergrößert werden muss. Wenn die Flügelkanten luvwärts gedreht werden, kommt unter der Winddruckwirkung eine unkontrollierbare Verschiebung der Halbzylinder zustande. Hier entsteht ein Trägerstoß. Das alles setzt einen Konstruktionsaufwand voraus und macht die Einrichtung weniger zuverlässig. Die Reduzierung des Durchmessers der Halbzylinder bedingt einen Leistungsrückgang und eine Minderung des Bereichs der Windarbeitsgeschwindigkeiten.

Es ist Aufgabe der Erfindung ein Windkraftwerk (WKW) zu entwickeln, das folgende Möglichkeiten aufweist:
- den Zeit-Leistungsbeiwert (den Windenergieausnutzungsfaktor) zu erhöhen (den Bereich der Windarbeitsgeschwindigkeiten zu erweitern),
- eine konstante Leistung des elektrischen Kraftwerkes unabhängig von der Geschwindigkeit und von der Richtung des Windes sicherzustellen,
- die Konstruktion zu vereinfachen, und
- die Betriebszuverlässigkeit zu erhöhen.

Das verursacht eine Fertigungskostensenkung und eine Minderung des Betriebsaufwands.

Die gestellte Aufgabe wird durch die Merkmale des Anspruchs 1 gelöst.

Das neue Windkraftwerk umfasst ein Belastungsgewicht, Träger und Flügel (Windaufnahmeflächen) mit Innen- und Außenkanten. In diesem Windkraftwerk sind die Flügel in Form von zwei Halbzylindern oder von mehreren Segmenten eines Hohlzylinders ausgeführt. Die Innen- und Außenkanten jedes Flügels sind an den Stirnflächen über die Sehne mittels einer Zugstange verbunden. Jede Zugstange ist zwischen der Außenkante und der Mitte gelenkig an Trägern befestigt. Die Träger sind an Lagern befestigt. Die Lager sind auf die unbewegliche Achse aufgesetzt. Jeder Flügel ist an den Stirnflächen zwischen der Mitte und der Außenkante mit der Stange des Nachbarflügels mittels einer Stange gelenkig gekoppelt. Dabei ist ein Ende der Stange mit dem Flügel zwischen der Mitte und der Außenkante an den Stirnflächen verbunden. Das andere Ende der Stange ist mit der Stange des Nachbarflügels zwischen der Mitte und der Außenkante gelenkig verbunden. Die Zugstange von einem Flügel ist gelenkig mit einem L-förmigen Trägerarm verbunden. Am Gegenende des Trägerarms ist ein Belastungsgewicht befestigt. Der Trägerarm ist am Träger gelenkig befestigt. Ein Antriebsrad ist am unteren Träger starr befestigt. Dabei ist die unbewegliche Achse innen in das Zahnrad eingebaut. Das Antriebsrad greift in ein angetriebenes Rad mit kleinerem Durchmesser ein. Das angetriebene Rad ist unten mittels einer Kugelsicherung und/oder einer Gelenkwelle mit einer elektromechanischen Anlage gekoppelt. Die unbewegliche Achse ist oben mittels Seile oder bogenförmiger Tragwerke am Boden festgemacht. Die unteren Enden der Tragwerke sind am Boden befestigt und zum Boden und/oder untereinander zusammengespannt.

Das technische Ergebnis kann auch bei einer anderen Ausführungsform erreicht werden.

Nach dieser Ausführungsform enthält das Kraftwerk eine Welle, ein Belastungsgewicht, Träger und Flügel (Windaufnahmeflächen und Drehkreisfläche). Die Flügel sind als zwei oder mehr Rohrsegmente (Hohlzylindersegmente) mit Innen- und Außenkanten ausgeführt. Die Träger sind starr an Lagern befestigt. Die Lager sind auf die unbewegliche Achse aufgesetzt. Zwei oder mehr Flügel sind mit Trägern gelenkig gekoppelt, und zwar in den Stirnflächen zwischen der Mitte und der Außenkante. Die Innen- und Außenkanten jedes Flügels sind untereinander an ihren Stirnflächen über die Sehne mittels einer Zugstange verbunden. Die Zugstange jedes Flügels ist mit dem Nachbarflügel mittels einer Stange gelenkig abgebunden. Dabei ist ein Ende der Stange mit der Zugstange an der Außenkante gelenkig verbunden. Das andere Ende ist mit dem Nachbarflügel zwischen der Zugstangenmitte und der Innenkante des Flügels gelenkig verbunden. Ein Antriebsrad ist am unteren Träger starr befestigt. Dabei ist die unbewegliche Achse innen in das Antriebsrad eingebaut. Das Antriebsrad ist mit einem angetriebenen Rad mit einem kleineren Durchmesser verzahnt. Das angetriebene Rad ist unten mittels einer Kugelsicherung und/oder einer Gelenkwelle mit einer elektromechanischen Anlage gekoppelt. Die unbewegliche Achse ist oben mittels Seile oder bogenförmiger Tragwerke am Boden festgemacht. Die unteren Enden der Tragwerke sind am Boden befestigt und zum Boden und/oder untereinander zusammengespannt.

Die Ursache-Wirkungs-Beziehung zwischen den wesentlichen Merkmalen der Erfindung und den erreichten Ergebnissen besteht im Folgenden: Beim Einsatz der genannten Merkmale nimmt der Windenergieausnutzungsfaktor zu. Das heißt, dass das WKW im Geschwindigkeitsbereich von 1 - 3 bis 90 m/s laufen wird. Als Ergebnis arbeitet das WKW um das Dreifache länger (dreimal die übliche Tageszahl), somit wird auch die Stromerzeugung um das Dreifache höher sein. Außerdem kann die Einzelleistung der Anlage wesentlich erhöht werden. Das wird dadurch erreicht, dass die Flügelfläche bei geringen Windgeschwindigkeiten vergrößert wird. Bei einer Erhöhung der Windgeschwindigkeiten wird die Flügelfläche vermindert, und zwar dadurch, dass die Flügel rings um ihre Scharnierhalterung am Träger geschlossen werden. Bei stürmischen Windstößen werden die Flügel durch die Wirkung der Belastungsgewichte auf die Zentrifugalkraft geschlossen. Dabei nimmt das WKW die Gestalt von einem Rohr (hohler Zylinder) an.

Die Betriebssicherheit wird sowohl durch eine einfache Bauweise als auch durch die Nichtdrehbarkeit der Achse sichergestellt. Die Betriebssicherheit wird auch durch das Vorhandensein einer Kugelsicherung der WKW-Welle und/oder von einer Kardanwelle mit der elektrochemischen Anlage sichergestellt.

Das Vorhandensein von einer Seilsicherung für die leistungsschwachen WKW und die Befestigung mittels bogenförmiger Tragwerke, die ihrerseits mittels Seile zum Boden hin und/oder untereinander zusammengezogen werden, stellen den sicheren Betrieb bei beliebigen Windgeschwindigkeiten und -stößen sowie bei wesentlicher Erhöhung der Einzelleistung des WKW sicher.

Die Erfindung wird anhand von in den Zeichnungen dargestellten Ausführungsbeispielen näher erläutert. Es zeigen:
- Fig. 1: in Draufsicht die Gesamtansicht des WKW,
- Fig. 2: den Schnitt durch die Vierflügel-Windaufnahmeflächen in Form von Hohlzylindersegmenten dar (Ihre Kanten sind an ihren Stirnflächen mittels Zugstangen verbunden. Die Zugstangen sind zwischen der Mitte und der Außenkante gelenkig an den Trägern befestigt),
- Fig. 3: den Schnitt die Vierflügel-Windaufnahmeflächen in Form von Hohlzylindersegmenten (Ihre Stirnflächen sind zwischen der Mitte und der Außenkante gelenkig an den Trägern befestigt),
- Fig. 4: den Schnitt der Dreiflügel-Windaufnahmeflächen in Form von Hohlzylindersegmenten (Ihre Stirnflächen sind zwischen der Mitte und der Außenkante gelenkig an den Trägern befestigt. Die Stangen sind mit der Zugstange an der Außenkante und mit dem Nachbarflügel zwischen der Mitte und der Innenkante gekoppelt),
- Fig. 5: den Schnitt der Dreiflügel-Windaufnahmeflächen in Form von Hohlzylindersegmenten (Ihre Stirnflächen sind gelenkig am Träger befestigt. Die Stangen sind mit der Zugstange an der Außenkante und mit der Zugstange zwischen der Mitte und der Innenkante des Nachbarflügels gekoppelt),
- Fig. 6: den Schnitt der Dreiflügel-Windaufnahmeflächen in Form von Hohlzylindersegmenten (Ihre Kanten sind mittels Zugstangen an ihren Stirnflächen verbunden. Die Zugstangen sind zwischen der Mitte und der Außenkante gelenkig an den Trägern befestigt) und
- Fig. 7: das Befestigungsschema des L-förmigen Trägerarms mit dem Belastungsgewicht, welches das Öffnen und das Schließen der Flügel (der Windaufnahmeflächen) bei der Windgeschwindigkeitsänderung sicherstellt.

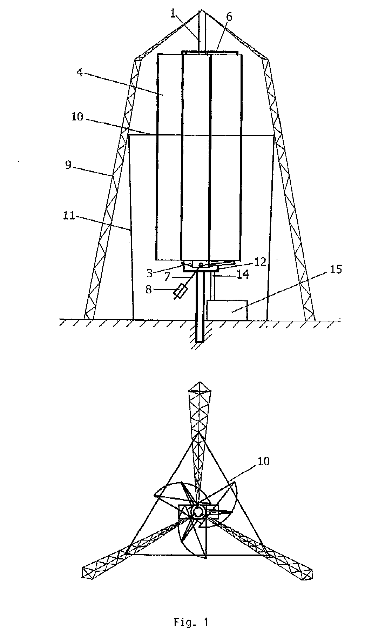

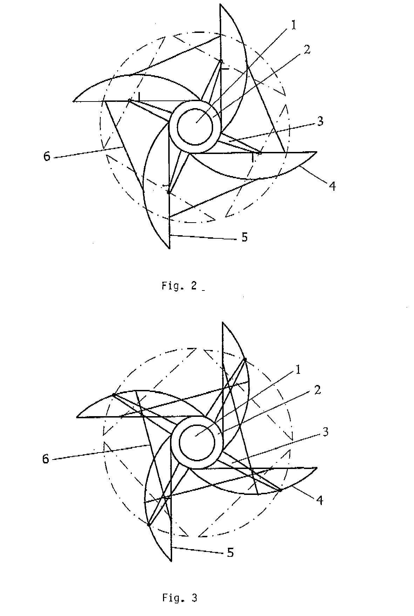

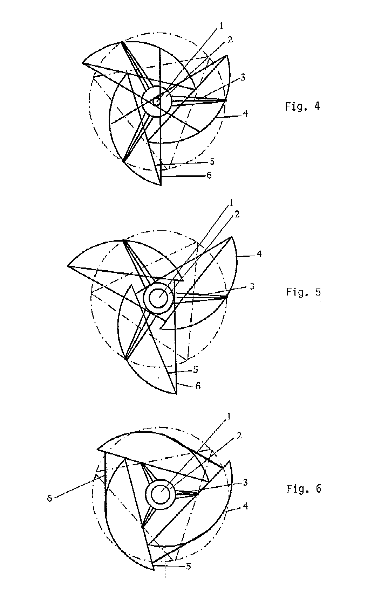

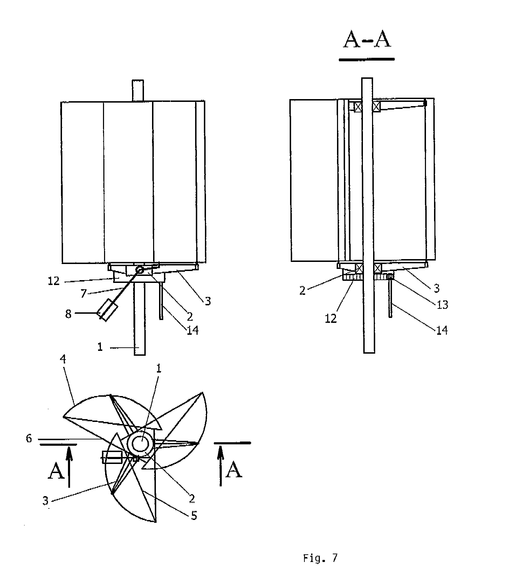

Das Windkraftwerk (Fig. 1) besteht aus einer unbeweglichen Achse 1, an der die Lager 2 befestigt sind (Fig. 2). Träger 3 sind an den Lagern 2 festgemacht. Eine Zugstange 5 ist gelenkig an einem Träger 3 zwischen der Außenkante und der Mitte befestigt (Fig. 2, Fig. 6). Die Zugstange 5 verbindet die Außen- und die Innenkante des Flügels 4 an ihren Stirnflächen. Die Flügel 4 sind in Form eines Rohrsegments (von einem Hohlzylinder) ausgeführt. Das eine Ende einer Stange 6 ist an der Zugstange 5 zwischen der Außenkante des Flügels 4 und der Mitte der Zugstange 3 gelenkig festgemacht. Das andere Ende der Stange 6 ist am Nachbarflügel 4 an den Stirnflächen gelenkig befestigt (Fig. 2, Fig. 6). Ein L-förmiger Trägerarm 7 ist gelenkig am Träger 3 festgemacht (Fig. 7). Das obere Ende des Trägerarms 7 ist gelenkig an einer der Zugstangen 5 zwischen der Außenkante und der Mitte festgemacht. Am unteren Ende des Trägerarms 7 ist ein Belastungsgewicht 8 befestigt.

Das obere Ende der unbeweglichen Achse 1 (Fig. 1) ist mit Auflageböcken oder Seilen 9 verbunden. Die Auflageböcke (oder Seile) 9 sind untereinander mittels waagerechten Zugstangen 10 verbunden und zum Boden (bzw. zum Unterbau) hin mit Zugstangen 11 (Fig. 1) herangezogen. Das untere Ende der unbeweglichen Achse 1 ist fest zum Boden oder zum Unterbau hin verankert. Ein Antriebsrad 12 ist am unteren Träger 3 von unten starr befestigt. Dabei befindet sich die unbewegliche Achse 1 innen im Antriebsrad 12. Das Antriebsrad 12 greift in ein angetriebenes Rad 13 mit kleinerem Durchmesser ein. Das angetriebene Rad 13 ist über eine Gelenkwelle oder durch eine Kugelsicherung 14 mit einer elektromechanischen Anlage 15 gekoppelt.

Nach der zweiten Ausführungsform (Fig. 3) ist der Flügel 4 an dem Träger 3 an den Stirnflächen zwischen der Mitte und der Außenkante gelenkig festgemacht. Die Zugstange 5 verbindet die Außen- und die Innenkanten des Flügels 4. Die Stange 6 ist an der Zugstange 5 zwischen der Mitte und der Außenkante gelenkig befestigt. Das andere Ende der Stange 6 ist am Nachbarflügel 4 zwischen der Mitte und der Außenkante gelenkig befestigt (Fig. 3). Die Stange 6 kann an der Außenkante des Flügels 4 und mittels des Nachbarflügels 4 zwischen der Mitte und der Innenkante (Fig. 4), oder an der Außenkante des Flügels 4 und mittels der Zugstange 5 des Nachbarflügels 4 zwischen der Mitte und der Außenkante (Fig. 5) befestigt werden. Die Befestigung der unbeweglichen Achse 1, die Sicherung des Trägerarms 7 und die Verbindung mit der elektromechanischen Anlage 15 erfolgen ähnlich wie bei der ersten Ausführungsform.

Das Windkraftwerk wird folgenderweise betrieben:

Der Windstrom trifft die Flügel 4. Dabei lässt er die Flügel 4, die Träger 3 und die Antriebsräder 12 auf den Lagern 2 rings um die unbewegliche Achse 1 drehen. Die Drehung des Antriebsrads 12 wird mittels des angetriebenen Rads 13 und der Gelenkwelle (oder der Kugelsicherung) 14 an die elektromechanische Anlage 15 weitergeleitet. Wird die Windgeschwindigkeit höher, so fängt das Belastungsgewicht 8 an, durch die Fliehkraftwirkung sich von der Drehachse zu entfernen. Das verursacht eine Abwanderung des Trägerarms 7 rings um die Scharnierhalterung. Der Trägerarm 7 zieht an der Zugstange 5. Dadurch werden die Flügel 4 rings um ihre Scharnierhalterung verlagert. Bei stürmischen Windstößen schließen die Flügel 4 und nehmen dadurch die Form eines Zylinders an.

Ist kein Wind vorhanden, so kommt das Belastungsgewicht 8 unter seiner Schwerkraftwirkung nach unten und öffnet die Flügel 4 mittels des Trägerarms 7 vollständig.

Die Funktionsweise des Windkraftwerkes nach der zweiten Ausführungsform ist ähnlich.

## Patentansprüche

1. Windkraftwerk bestehend aus einem Belastungsgewicht, Trägern und Flügeln mit Innen- und Außenkanten,
**dadurch gekennzeichnet,**
**dass** die Innen- und Außenkanten jedes Flügels (4) an den Stirnflächen über ihre Sehnen mittels einer Zugstange (5) verbunden sind,
**dass** jede Zugstange (5) zwischen der Außenkante und der Mitte gelenkig an einem Träger (3) befestigt ist,
**dass** die Träger (3) an Lagern (2) angebracht sind, die auf eine unbewegliche Achse (1) aufgesetzt sind,
**dass** jeder Flügel (4) an den Stirnflächen zwischen der Mitte und der Außenkante mit dem Nachbarflügel (4) mittels einer Stange (6) gelenkig gekoppelt ist,
**dass** dabei ein Ende der Stange (6) mit dem Flügel (4) zwischen der Mitte und der Außenkante an den Stirnflächen verbunden ist,
**dass** das andere Ende der Stange (6) mit der Stange (6) des Nachbarflügels (4) zwischen der Mitte und der Außenkante gelenkig verbunden ist,
**dass** die Zugstange (5) eines Flügels (4) gelenkig mit einem L-förmigen Trägerarm (7) verbunden ist, wobei der Trägerarm (7) an den Träger (3) befestigt ist,
**dass** am Gegenende des L-förmigen Trägerarms (7) ein Belastungsgewicht (8) befestigt ist,
**dass** ein Antriebsrad (12) starr mit dem Träger (3) verbunden ist,
**dass** die unbewegliche Achse (1) in das Zahnrad (13) eingebaut ist, das mit einem angetriebenen Zahnrad (13) verzahnt ist,
**dass** das angetriebene Zahnrad (13) mit kleinerem Durchmesser unten mittels einer Kugelsicherung (14) gekoppelt ist,
**dass** die unbewegliche Achse (1) oben mittels Seile (9) oder bogenförmiger Tragwerke am Boden oder am Unterbau festgemacht ist und
**dass** die Tragwerke im mittleren Teil mittels Seile (10) zum Boden hin und/oder untereinander zusammengespannt sind.

2. Windkraftwerk bestehend aus einem Belastungsgewicht, Trägern und Flügeln mit Innen- und Außenkanten,
**dadurch gekennzeichnet,**
**dass** zwei oder mehr Flügel (4) an den Trägern (3) gelenkig angebracht sind und zwar in den Stirnflächen zwischen der Mitte und der Außenkante der Flüge (4),
**dass** die Innen- und die Außenkante jedes Flügels (4) an ihren Stirnseiten untereinander über die Sehne mittels einer Zugstange (5) verbunden sind,
**dass** die Zugstange (5) jedes Flügels (4) mit der Zugstange (5) des Nachbarflügels (4) mittels einer Stange (6) gelenkig verbunden ist,
**dass** dabei ein Ende der Stange (6) mit der Zugstange (5) an der Außenkante gelenkig verbunden ist,
**dass** das andere Ende der Stange (6) mit dem Nachbarflügel (4) zwischen der Zugstangenmitte und der Innenkante des Flügels (4) oder mit dem Nachbarflügel (4) zwischen der Mitte und der Innenkante gelenkig gekoppelt ist,
**dass** die Zugstange (5) eines Flügels (4) gelenkig an einem L-förmigen Trägerarm (7) befestigt ist,
**dass** der Trägerarm (7) mit seinem entgegengesetzten Ende mit einem Belastungsgewicht (8) verbunden ist,
**dass** der Trägerarm (7) an dem Träger (3) gelenkig befestigt ist,
**dass** ein Antriebsrad (12) am Träger (3) starr befestigt ist,
**dass** die unbewegliche Achse (1) innen im Antriebsrad (12) untergebracht ist, das mit einem angetriebenen Zahnrad (13) mit kleinerem Durchmesser verzahnt ist,
**dass** das angetriebene Zahnrad (13) unten mit einer elektromechanischen Anlage (15) mittels einer Kugelsicherung (14) und/oder einer Gelenkwelle gekoppelt ist,
**dass** die unbewegliche Achse (1) oben mittels Seile (9) oder bogenförmiger Tragwerke am Boden oder am Unterbau festgemacht ist und
**dass** die Tragwerke im mittleren Teil mittels Seile (9) zum Boden hin und/oder untereinander zusammengespannt sind.
